## Europäisches Patentamt
## European Patent Office
## Office européen des brevets

(19)

(11) Numéro de publication : **0 323 934 B1**

(12)
# FASCICULE DE BREVET EUROPEEN

(45) Date de publication du fascicule du brevet :
**01.04.92 Bulletin 92/14**

(51) Int. Cl.⁵ : **F01M 11/10**

(21) Numéro de dépôt : **89400036.3**

(22) Date de dépôt : **05.01.89**

(54) **Dispositif de surveillance d'usure d'huile.**

(30) Priorité : **08.01.88 FR 8800128**

(43) Date de publication de la demande :
**12.07.89 Bulletin 89/28**

(45) Mention de la délivrance du brevet :
**01.04.92 Bulletin 92/14**

(84) Etats contractants désignés :
**DE ES GB IT**

(56) Documents cités :
**EP-A- 0 062 868**
**EP-A- 0 080 632**
**EP-A- 0 174 601**
**EP-A- 0 191 458**
**FR-A- 2 321 040**

(73) Titulaire : **JAEGER**
**2, rue Baudin**
**F-92303 Levallois-Perret (FR)**

(72) Inventeur : **Rocques, Alain**
**6, rue François Malherbe**
**F-78180 Montigny-le-Bretonneux (FR)**

(74) Mandataire : **Martin, Jean-Jacques et al**
**Cabinet REGIMBEAU 26, Avenue Kléber**
**F-75116 Paris (FR)**

Jouve, 18, rue Saint-Denis, 75001 PARIS

## Description

La présente invention concerne le domaine de la surveillance in situ de l'usure d'huile, telle que l'huile assurant la lubrification de moteurs de véhicules automobiles. La présente invention n'est cependant pas limitée à la surveillance de l'usure de ce type particulier d'huile ; elle s'étend à la surveillance de l'usure de tout type d'huile, par exemple l'huile utilisée dans le circuit de freinage, l'huile utilisée pour la lubrification de la boîte de vitesses.

On a tenté de développer depuis quelques années des dispositifs embarqués sur véhicules automobiles et conçus pour contrôler l'usure de l'huile afin d'alerter l'utilisateur lorsqu'un seuil de dégradation du pouvoir lubrifiant de l'huile est atteint. Les tentatives actuelles se sont orientées vers l'utilisation de deux électrodes plongées dans l'huile pour mesurer la résistivité ou la capacité d'un échantillon d'huile formé entre ces électrodes. En théorie ces paramètres permettent en effet de déterminer le pouvoir de lubrification de l'huile.

Le document FR-A-2321040 décrit par exemple un dispositif de surveillance mesurant la résistivité de l'huile, tandis que le document EP-A-080632 décrit un dispositif de surveillance mesurant la capacité d'un échantillon d'huile.

Bien que l'idée d'embarquer de tels dispositifs sur véhicules automobiles afin d'alerter en temps utile l'utilisateur du véhicule soit séduisante en théorie, car elle permettrait de garantir la longévité des véhicules tout en autorisant une utilisation optimale de l'huile, on constate dans la pratique que de tels dispositifs embarqués de surveillance d'usure d'huile sont peu utilisés de nos jours.

Ce désintérêt apparent semble dû au fait que des huiles présentant des caractéristiques électriques très différentes sont susceptibles d'être utilisées, au choix de l'utilisateur, sur un même véhicule automobile, alors que les dispositifs jusqu'ici étudiés ne permettent en général que de surveiller l'usure d'une huile spécifique.

Le document EP-A-0191548 décrit un dispositif de surveillance d'usure d'huile qui comprend :
- des premiers moyens aptes à détecter les valeurs de facteurs de dégradation de l'huile, à savoir : la température de l'huile, la vitesse du moteur, et la distance parcourue,
- des seconds moyens aptes à combiner ces valeurs sur la base d'une formule prédéterminée et à intégrer le résultat obtenu dans le temps,
- des troisièmes moyens aptes à générer une alarme lorsque le résultat intégré par les seconds moyens dépasse une valeur de consigne, et
- des quatrièmes moyens à détecter l'adjonction d'huile pour différer la génération de l'alarme.

Le document EP-A-0191458 propose également d'utiliser un clavier pour introduire dans le dispositif des données représentatives de la nature de l'huile.

La présente invention a pour but de proposer de nouveaux moyens permettant de surveiller l'usure d'huiles présentant entre elles une grande disparité de caractéristiques électriques.

Ce but est atteint selon l'invention grâce à un dispositif comprenant de façon connue en soi :
- des moyens aptes à mesurer au moins un paramètre représentatif de l'usure de l'huile,
- des moyens aptes à fournir une information représentative de la distance parcourue par le véhicule depuis une vidange d'huile,
- des moyens de mémorisation d'une valeur de consigne,
- des moyens de comparaison aptes à comparer la valeur de consigne mémorisée avec un paramètre de comparaison lié au paramètre mesuré, pour générer une alerte lorsque l'écart entre la valeur de consigne et le paramètre de comparaison dépasse un seuil déterminé, et caractérisé par le fait qu'il comprend en outre
- des moyens de contrôle aptes à
. inhiber les moyens de mémorisation et de comparaison dans une première plage de distance parcourue par le véhicule après une vidange d'huile,
. provoquer la mémorisation, en tant que valeur de consigne, du paramètre mesuré, tout en maintenant l'inhibition des moyens de comparaison, à la fin de la première plage de distance parcourue après une vidange d'huile, et
. assurer la mise en service des moyens de comparaison après la mémorisation de la valeur de consigne, lorsque le véhicule atteint une seconde plage de distance après une vidange d'huile, de sorte que les moyens de comparaison comparent alors la valeur de consigne mémorisée avec la paramètre mesuré.

Le dispositif conforme à la présente invention permet d'adapter la valeur de consigne à l'huile utilisée, et permet donc de mettre en oeuvre le même dispositif de surveillance quelle que soit la nature de l'huile concernée.

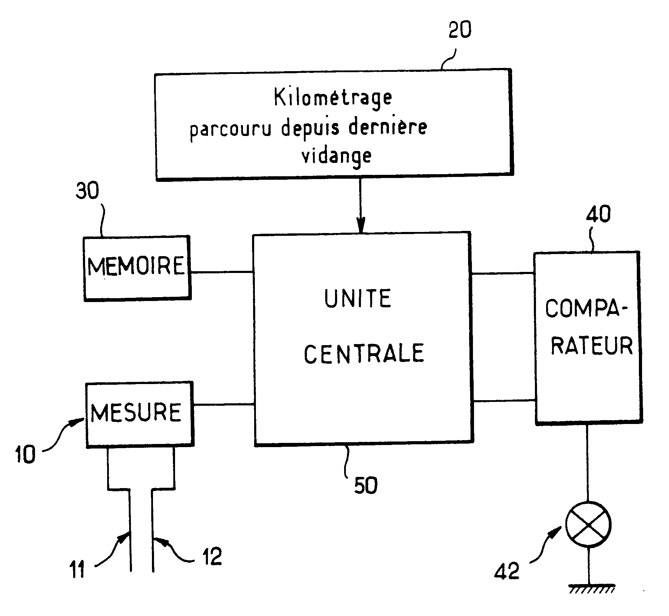

D'autres caractéristiques, buts et avantages de la présente invention apparaîtront à la lecture de la description détaillée qui va suivre, et en regard de la figure annexée qui représente sous forme de blocs fonctionnels le dispositif de surveillance conforme à la présente invention.

Le dispositif de surveillance conforme à la présente invention illustré schématiquement sur la figure unique annexée comprend :
- des moyens 10 aptes à mesurer au moins un paramètre représentatif de l'usure de l'huile,
- des moyens 20 d'enregistrement de la distance parcourue depuis la vidange précédente,

– des moyens de mémorisation 30,
– des moyens de comparaison 40, et
– des moyens de contrôle 50.

Les moyens de mesure 10 comprennent avantageusement deux électrodes 11, 12, séparées d'une distance déterminée. Les électrodes 11, 12 sont plongées dans l'huile en vue d'une mesure de résistivité ou de capacité sur l'échantillon d'huile présent entre les électrodes. De tels moyens de mesure de la résistivité ou de la capacité d'un échantillon d'huile sont connus en soi de l'homme du métier et ne seront donc pas décrits plus en détail par la suite.

Les moyens 20 destinés à enregistrer la distance parcourue depuis la dernière vidange peuvent faire l'objet de nombreux modes de réalisation. Bien entendu ces moyens doivent être conçus pour être remis à zéro lors de chaque vidange.

La remise à zéro des moyens 20 lors de chaque vidange, peut être assurée manuellement. Elle peut aussi être assurée automatiquement lors de la détection d'une amélioration soudaine du pouvoir lubrifiant de l'huile.

Les moyens 30 ont pour but de mémoriser une valeur de consigne dans une mémoire non volatile.

Les moyens 40 ont pour but de comparer la valeur de consigne mémorisée dans la mémoire 30 au paramètre mesuré par les moyens 10, afin de générer une alerte lorsque l'écart entre la valeur de consigne mémorisée dans les moyens 30 et le paramètre mesuré par les moyens 10 dépassent un seuil déterminé correspondant à un seuil de dégradation du pouvoir lubrifiant de l'huile.

L'alerte peut être visualisée à l'aide d'un témoin lumineux schématiquement illustré sous la référence 42 sur la figure annexée.

En variante les moyens de comparaison 40 peuvent être associés à des moyens d'affichage aptes à visualiser une information analogique ou numérique correspondant à la dégradation du pouvoir lubrifiant de l'huile.

Les moyens de contrôle 50 déterminent deux plages de distance parcourue depuis une vidange à partir des informations délivrées par les moyens 20.

Au cours d'une première plage les moyens de contrôle 50 inhibent les moyens de mémorisation 30 et les moyens de comparaison 40.

A la fin de la première plage de distance parcourue, les moyens de contrôle provoquent la mémorisation dans les moyens 30, en tant que valeur de consigne, du paramètre mesuré par les moyens 10. Au cours de cette mémorisation les moyens de contrôle 50 maintiennent l'inhibition des moyens de comparaison 40.

Enfin, dans une deuxième plage de distance parcourue, les moyens de contrôle 50 empêchent le rafraîchissement de l'information dans les moyens 30 et assurent la mise en service des moyens de comparaison 40.

La première plage, qui correspond à une inhibition des moyens de mémorisation 30 et des moyens de comparaison 40 permet un mélange de l'huile et un "lavage" des électrodes 11, 12. Elle évite la mémorisation d'une valeur de consigne erronée si l'huile utilisée après vidange diffère de l'huile vidangée.

La valeur de consigne mémorisée à la fin de la première plage de distance parcourue est déduite spécifiquement de l'huile neuve utilisée.

Enfin, la deuxième plage au cours de laquelle les moyens 40 comparent en continu la valeur instantanée du paramètre mesuré par les moyens 10 à la valeur de consigne mémorisée dans les moyens 30 permet une surveillance continuelle de l'état de dégradation du pouvoir lubrifiant de l'huile.

De façon avantageuse, la première plage de distance parcourue à partir d'une vidange d'huile est inférieure à environ 100 à 1000 kilomètres, en étant de préférence inférieure à 500 kilomètres.

De façon avantageuse, la deuxième plage de distance parcourue, au cours de laquelle la surveillance de la dégradation du pouvoir lubrifiant de l'huile est effectivement assurée par les moyens comparateurs 40 est de préférence supérieure à 500 kilomètres.

Bien entendu la présente invention n'est pas limitée au mode de réalisation particulier qui vient d'être décrit mais s'étend à toutes variantes conformes à son esprit.

Selon une première variante, les moyens de contrôle 50 peuvent être conçus pour rejeter toute valeur mesurée par les moyens 10 qui diffère d'une valeur antérieurement mesurée d'un écart supérieur à un seuil prédéterminé. Cette disposition permet d'éliminer l'influence néfaste sur la mesure de phénomènes extérieures, tels que par exemple une brusque variation d'hygrométrie.

Selon une deuxième variante les moyens de contrôle 50 peuvent être conçus pour surveiller en continu la pente d'évolution de pouvoir lubrifiant mesuré de l'huile et pour générer une alarme lorsque cette pente dépasse un seuil prédéterminé. Le dépassement de ce seuil de pente est dû en effet à un fonctionnement anormal du moteur, le plus souvent à l'intervention de corps étrangers, par exemple à la pénétration d'eau dans le carter d'huile.

## Revendications

1. Dispositif de surveillance in situ de l'usure d'huile, telle que l'huile assurant la lubrification de moteurs de véhicules automobiles, comprenant :
   – des moyens (10) aptes à mesurer au moins un paramètre représentatif de l'usure de l'huile,
   – des moyens (20) aptes à fournir une information représentative de la distance parcourue par le véhicule depuis une vidange d'huile,
   – des moyens (30) de mémorisation d'une valeur de consigne,
– des moyens (40) de comparaison aptes à comparer la valeur de consigne mémorisée avec un paramètre de comparaison lié au paramètre mesuré, pour générer une alerte lorsque l'écart entre la valeur de consigne et le paramètre de comparaison dépasse un seuil déterminé, et caractérisé par le fait qu'il comprend en outre :
– des moyens de contrôle (50) aptes à
. inhiber les moyens de mémorisation (30) et de comparaison (40) dans une première plage de distance parcourue par le véhicule après une vidange d'huile,
. provoquer la mémorisation (30), en tant que valeur de consigne, du paramètre mesuré, tout en maintenant l'inhibition des moyens de comparaison (40), à la fin de la première plage de distance parcourue après une vidange d'huile, et
. assurer la mise en service des moyens de comparaison (40) après la mémorisation de la valeur de consigne lorsque le véhicule atteint une seconde plage de distance après une vidange d'huile, de sorte que les moyens de comparaison comparent alors la valeur de consigne mémorisée avec le paramètre mesuré.

2. Dispositif selon la revendication 1, caractérisé par le fait que la première plage de distance est inférieure à environ 100 à 1000 kilomètres à partir d'une vidange d'huile.

3. Dispositif selon l'une des revendications 1 à 2, caractérisé par le fait que la première plage de distance est inférieure à 500 kilomètres à partir d'une vidange d'huile.

4. Dispositif selon l'une des revendications 1 à 3, caractérisé par le fait que la seconde plage est supérieure à environ 1000 kilomètres à partir d'une vidange d'huile.

5. Dispositif selon l'une des revendications 1 à 4, caractérisé par le fait que la seconde plage de distance parcourue est supérieure à 500 kilomètres à partir d'une vidange d'huile.

6. Dispositif selon l'une des revendications 1 à 5, caractérisé par le fait que les moyens (10) aptes à mesurer un paramètre représentatif de l'usure de l'huile comprennent deux électrodes (11, 12) séparées d'une distance déterminée, adaptées pour mesurer la résistivité d'un échantillon d'huile présent entre les électrodes.

7. Dispositif selon l'une des revendications 1 à 5, caractérisé par le fait que les moyens (10) aptes à mesurer un paramètre représentatif de l'usure de l'huile comprennent deux électrodes (11, 12) séparées d'une distance déterminée, adaptées pour mesurer la capacité d'un échantillon d'huile présent entre les électrodes.

8. Dispositif selon l'une des revendications 1 à 7, caractérisé par le fait que les moyens de contrôle (50) assurent la remise à zéro automatique des moyens (20) indicateurs de distance lors de la détection d'une amélioration soudaine du pouvoir lubrifiant de l'huile.

9. Dispositif selon l'une des revendications 1 à 8, caractérisé par le fait que les moyens de contrôle (50) surveillent en continu la pente d'évolution du pouvoir lubrifiant mesuré de l'huile et génèrent une alarme lorsque cette pente dépasse un seuil prédéterminé.

**Patentansprüche**

1. Einrichtung zum Überwachen der Abnutzung von Öl in situ, wobei das Öl die Schmierung von Kraftfahrzeugmotoren sicherstellt, mit
– einer Vorrichtung (10) zum Messen mindestens einer für die Abnutzung des Öles repräsentativen Kenngröße,
– einer Vorrichtung (20) zum Bereitstellen einer Information entsprechend der von dem Fahrzeug seit einem Ölwechsel zurückgelegten Strecke,
– einer Vorrichtung (30) zum Speichern eines Sollwertes,
– einer Vergleichervorrichtung (40) zum Vergleichen des gespeicherten Sollwertes mit einem mit der gemessenen Kenngröße gekoppelten Vergleichsparameter, um einen Alarm zu erzeugen, wenn der Unterschied zwischen dem Sollwert und dem Vergleichsparameter eine gegebene Schwelle übersteigt, **gekennzeichnet** durch
– eine Steuervorrichtung (50) zum
. Sperren der Speichervorrichtung (30) und der Vergleichervorrichtung (40) während eines ersten von dem Fahrzeug nach einem Ölwechsel zurückgelegten Entfernungsabschnitts,
. Auslösen des Speicherns (30) der gemessenen Kenngröße als Sollwert unter Aufrechterhalten der Sperrung der Vergleichervorrichtung (40) am Ende des ersten, nach einem Ölwechsel zurückgelegten Entfernungsabschnittes und
. Sicherstellen des Inbetriebsetzens der Vergleichervorrichtung (40) nach dem Speichern des Sollwertes, wenn das Fahrzeug einen zweiten Entfernungsabschnitt nach einem Ölwechsel erreicht, so daß die Vergleichervorrichtung dann den gespeicherten Sollwert mit der gemessenen Kenngröße vergleicht.

2. Einrichtung nach Anspruch 1, dadurch **gekennzeichnet,** daß der erste Entfernungsabschnitt kürzer als ungefähr 100 bis 1000 km ab einem Ölwechsel ist.

3. Einrichtung nach einem der Ansprüche 1 bis 2, dadurch **gekennzeichnet,** daß der erste Entfernungsabschnitt kürzer als 500 km ab einem Ölwechsel ist.

4. Einrichtung nach einem der Ansprüche 1 bis 3, dadurch **gekennzeichnet**, daß der zweite Abschnitt länger als etwa 1000 km ab einem Ölwechsel ist.

5. Einrichtung nach einem der Ansprüche 1 bis 4, dadurch **gekennzeichnet,** daß der zweite zurückgelegte Entfernungsabschnitt länger als 500 km ab einem Ölwechsel ist.

6. Einrichtung nach einem der Ansprüche 1 bis 5, dadurch **gekennzeichnet,** daß die Vorrichtung (10) zum Messen einer für die Abnutzung des Öles repräsentativen Kenngröße zwei voneinander um eine gegebene Strecke entfernte Elektroden (11,12) aufweist, die die Leitfähigkeit einer zwischen den Elektroden liegenden Ölprobe messen können.

7. Einrichtung nach einem der Ansprüche 1 bis 5, dadurch **gekennzeichnet,** daß die Vorrichtung (10) zum Messen einer für die Abnutzung des Öles repräsentativen Kenngröße zwei um eine gegebene Strecke voneinander entfernte Elektroden (11,12) aufweist, die die Kapazität einer zwischen den Elektroden liegenden Ölprobe messen können.

8. Einrichtung nach einem der Ansprüche 1 bis 7, dadurch **gekennzeichnet,** daß die Steuervorrichtung (50) das automatische Rücksetzen auf Null der Entfernungsanzeigevorrichtung (20) beim Erkennen einer plötzlichen Verbesserung der Schmierfähigkeit des Öles sicherstellt.

9. Einrichtung nach einem der Ansprüche 1 bis 8, dadurch **gekennzeichnet,** daß die Steuervorrichtung (50) ununterbrochen die Entwicklungsneigung der gemessenen Schmierfähigkeit des Öls überwacht und einen Alarm erzeugt, wenn diese Neigung eine vorgegebene Schwelle überschreitet.

**Claims**

1. Device for in-situ monitoring of the degradation of oil, such as the oil carrying out the lubrication of engines of motor vehicles, comprising:
   – means (10) able to measure at least one parameter representative of the degradation of the oil,
   – means (20) able to deliver a data item representative of the distance covered by the vehicle since an oil change,
   – means (30) of memorising a reference value,
   – means (40) of comparison able to compare the memorised reference value with a comparison parameter linked to the measured parameter, in order to generate a warning when the disparity between the reference value and the comparison parameter exceeds a set threshold, and characterised by the fact that it additionally comprises:
   – means of control (50) able to
      . inhibit the means of memorising (10) and of comparison (40) over a first range of distance covered by the vehicle after an oil change,
      . instigate the memorising (10) as reference value, of the measured parameter, while maintaining the inhibiting of the means of comparison (40), at the end of the first range of distance covered after an oil change, and
      . carry out the implementation of the means of comparison (40) after the memorising of the reference value when the vehicle reaches a second range of distance after an oil change, so that the means of comparison then compare the memorised reference value with the measured parameter.

2. Device according to Claim 1, characterised by the fact that the first range of distance is less than about 100 to 1000 kilometres since an oil change.

3. Device according to one of Claims 1 or 2, characterised by the fact that the first range of distance is less than 500 kilometres since an oil change.

4. Device according to one of Claims 1 to 3, characterised by the fact that the second range is greater than about 1000 kilometres since an oil change.

5. Device according to one of Claims 1 to 4, characterised by the fact that the second range of distance covered is greater than 500 kilometres since an oil change.

6. Device according to one of Claims 1 to 5, characterised by the fact that the means (10) able to measure a parameter representative of the degradation of the oil comprise two electrodes (11, 12) separated by a set distance, adapted to measure the resistivity of a sample of oil present between the electrodes.

7. Device according to one of Claims 1 to 5, characterised by the fact that the means (10) able to measure a parameter representative of the degradation of the oil comprise two electrodes (11, 12) separated by a set distance, adapted to measure the capacity of a sample of oil present between the electrodes.

8. Device according to one of Claims 1 to 7, characterised by the fact that the means of control (50) carry out the automatic resetting to zero of the distance indicator means (20) when a sudden improvement in the lubricating power of the oil is detected.

9. Device according to one of Claims 1 to 8, characterised by the fact that the means of control (50) continuously monitor the slope of change of the measured lubricating power of the oil and generate an alarm when this slope exceeds a predetermined threshold.